# EUROPEAN PATENT APPLICATION

(11) **EP 2 899 112 A1**
(43) Date of publication of application: **29.07.2015**
(21) Application number: 14382020.7
(22) Date of filing: 23.01.2014
(51) Int. Cl.: B63B 35/44

(54) **Floating offshore structures**

(71) Applicant: Alstom Renovables España, S.L., 08005 Barcelona (ES)
(72) Inventor: Betran Palomas, Jaume, 08172 SANT CUGAT DEL VALLÈS (ES); Bergua, Roger, 08017 BARCELONA (ES); Jové, Jordi, 08018 BARCELONA (ES)
(74) Representative: ZBM Patents - Zea, Barlocci & Markvardsen

(57) **Abstract**

Floating offshore structures comprising a buoyancy structure arranged such that in use it remains below the sea level, and a tower, wherein the buoyancy structure is attached to the tower by a substantially tubular connecting structure, wherein one or more through channels are provided in the buoyancy structure, the through channels being traversing the buoyancy structure and extending from a bottom portion of the buoyancy structure to an inner portion of the connecting structure, the through channels being dimensioned such that sea water can flow into and out of the connecting structure with variations of the sea level. The application further relates to floating offshore structures comprising a wind turbine and to methods of reducing buoyancy variations in such floating offshore structures.

## Description

The present disclosure relates to floating offshore structures.

### BACKGROUND

Floating offshore structures such as e.g. oil platforms, offshore wind turbines, and offshore meteorological towers are known.

Several configurations have been proposed for the floating or buoyancy of structures: many of these employ floater elements in the form of substantially hollow floater tanks that in use are arranged substantially below the sea level and provide a buoyancy force to support the structure, e.g. a wind turbine. Ballast and/or mooring lines anchored to the seabed are provided for achieving stability.

In some of these floating structures, the buoyancy structure is designed to provide an excess buoyancy force and is maintained floating under the sea level by taut mooring lines tensioned by the excess buoyancy force.

For example, in connection with wind turbines, concepts have been developed such as the "Taught Leg Buoy" (TLB) floating wind turbine, with a slender cylindrical buoy and two or more sets of tensioned mooring lines, inclined relative to the seabed and connected to gravity anchors and to the buoy; or such as the "Tension Leg Platform" (TLP) floating wind turbine, in which the tensioned mooring lines are substantially vertical and are connected between gravity anchors on the seabed and arms or braces extending radially outwards with respect to the vertical axis of the wind turbine. The arms of the TLP may be part of the buoyancy structure, for example, in the form of hollow spokes that extend radially outwards from a hollow central hub, or may be arranged above the sea level, in which case the buoy may be a slender cylindrical tank like in the TLB concept. TLP and TLB concepts are also known for other offshore structures.

In order for these structures to be stable, the mooring lines must always be under tension; otherwise the offshore structure could become unstable and could fall over. Since the loads on the offshore structures, and particularly on a floating wind turbine may vary considerably both in magnitude and direction, a high amount of excess buoyancy and high tension in the cables may be required.

The buoyancy structures of floating offshore structures, particularly of floating wind turbines, may be subjected to several loads, such as for example the weight of the wind turbine itself, impacts, forces exerted by waves, currents and tides, and also aerodynamic forces associated with the wind, rotor rotation, etc.

Buoyancy structures are also subjected to great loads especially derived from buoyancy variations because buoyancy varies considerably with sea level changes, i.e. tide changes or waves, which result in significant variations of the floater submerged volume providing buoyancy to the structure. At low tide, the sea level becomes lower and the tension in the mooring lines can be relatively low (and could be equal to a minimum required tension to maintain stability). In these cases care should be taken for the buoyancy / tension in the mooring lines not to reach zero. When the sea level rises at e.g. high tide, the tension in the mooring lines can be significantly higher, i.e. in this example, the tension in the mooring lines at high tide would be equal to the minimum required tension (the tension at low tide) plus the entire buoyancy variation. In this case, oversizing of the cables and arms may be required to avoid potential breakage when high water levels exist. If the buoyancy variation could be reduced, the tension variation in the mooring lines could also be reduced, thus improving fatigue behaviour while maintaining stability, at the same time.

Therefore, there is a need for floating offshore structures that substantially reduce buoyancy variations, but at the same time maintain their stability.

### SUMMARY

In accordance with a first aspect, a floating offshore structure is provided. The floating structure comprises a buoyancy structure arranged such that in use it remains below the sea level and a pole. The buoyancy structure is attached to the pole by a substantially tubular connecting structure. One or more through channels are provided in the buoyancy structure. The through channels are arranged to traverse the buoyancy structure and extend from a bottom portion of the buoyancy structure to an inner portion of the connecting structure and are dimensioned such that sea water can flow into and out of the connecting structure depending on the sea level.

Having one or more through channels traversing the buoyancy structure from its bottom portion to an inner portion of the connecting structure and having the channel dimensioned such that sea water can flow into and out of the connecting structure ensures that inside the connecting structure the water level will correspond to the sea level. Thus, the connecting structure does not add extra buoyancy to the system. Or, what is the same, no extra buoyancy would be added to the offshore structure by the connecting structure when the sea level becomes higher and no reduction of buoyancy would affect the offshore structure when the sea level becomes lower. Buoyancy variations due to waves or tide changes can thus be avoided or at least substantially reduced. The tension in the cables of e.g. an offshore wind turbine (minimum required tension plus maximum buoyancy variation plus tension induced by wind acting on the rotor) could thus also be reduced. This may lead to a reduced size and cost of the cables and arms.

Furthermore it is quite a simple and cost-effective solution that can be implemented in many offshore structures.

All throughout the present description and claims, the expression "tubular connecting structure" should be understood to cover cross sectional shapes such as circular, quadrangular, triangular and others. In other words, the outer cross section is of no significance as long as the connecting structure is a substantially hollow and closed structure.

In some examples, the connecting structure or the pole may further comprise one or more breathing orifices arranged such that in use they remain above the sea level. This enhances the natural flow of water into and out of the connecting structure as it facilitates the required evacuation and filling of air contained in the connecting structure when water flows into and out of the connecting structure. An aspect of providing breathing orifices in the connecting structure of, for example, an offshore wind turbine in which the pole is the wind turbine tower is that the tower could be closed up and thus effectively be protected from e.g. potentially damaging salt in the air.

In some examples, the floating offshore structure may further comprise a wind turbine and the pole may be a wind turbine tower. In other examples, the floating offshore structure may be a floating meteorological tower, an offshore oil platform, a floating bridge, a floating breakwater structure, a floating LPG terminal or other. In some of these examples, more than one pole may be arranged on top of the buoyancy structure.

In some examples, the through channels may be dimensioned taking into account statistical information of local waves. The statistical information of waves *in situ* may be used in particular for determining a cross-sectional area of one or more of the through channels or a total cross-sectional area of all the through channels. The cross-sectional area of the channels determines to a large extent the flow capacity through the channels (volume rate).

In an example, frequencies and amplitudes of waves *in situ* may be taken into account. The statistical information could be based on a power spectrum representing the energy of the waves and their frequencies. Based on such a spectrum a "cut-off" could be determined in the sense that the dimensions of the channels may be determined such that e.g. the highest waves, or the waves having the most energy, can effectively flow into and out of the channels. The potentially most problematic waves may thus effectively be absorbed and the variation of buoyancy in this case may be effectively reduced. In general, if the through channels are designed such that the highest waves can be absorbed, i.e. water can flow into and out of the channels, other scenarios having, e.g. waves of smaller period (higher frequency) and less energy (height) would thus also be absorbed. This means that extreme loads acting on the structure can be absorbed with these through channels. Of course, safety factors may be taken into account when determining the dimensions of the channels.

In another example, depending on the circumstances, the statistically most frequently encountered types of waves, i.e. the waves producing most of fatigue loads on the structure, may be taken as a basis for the design of the through channel(s). In these cases the highest waves may only be absorbed in part. Therefore this example may be especially suitable for those sites without significant wave peaks higher than the typical, average wave height. In accordance with another aspect, a method of reducing buoyancy variations in a floating offshore structure is provided. The offshore structure comprises a buoyancy structure arranged such that in use it remains below the sea level and a pole or a tower, wherein the buoyancy structure is attached to the pole/tower by a substantially tubular connecting structure. The method comprises providing one or more through channels in the buoyancy structure arranged traversing the buoyancy structure and extending from a bottom portion of the buoyancy structure to an inner portion of the connecting structure and dimensioned such that sea water can flow into and out of the connecting structure depending on the sea level.

### BRIEF DESCRIPTION OF THE DRAWINGS

Non-limiting examples of the present disclosure will be described in the following with reference to the appended drawings, in which:
Figure 1 schematically illustrates a side view of an offshore floating wind turbine;
Figures 2a and 2b show a perspective viewed from the bottom and a cross-sectional view of the buoyancy structure of the floating wind turbine of figure 1; and
Figure 3 schematically illustrates a power spectral density (PSD) curve for sea water.

### DETAILED DESCRIPTION OF EXAMPLES

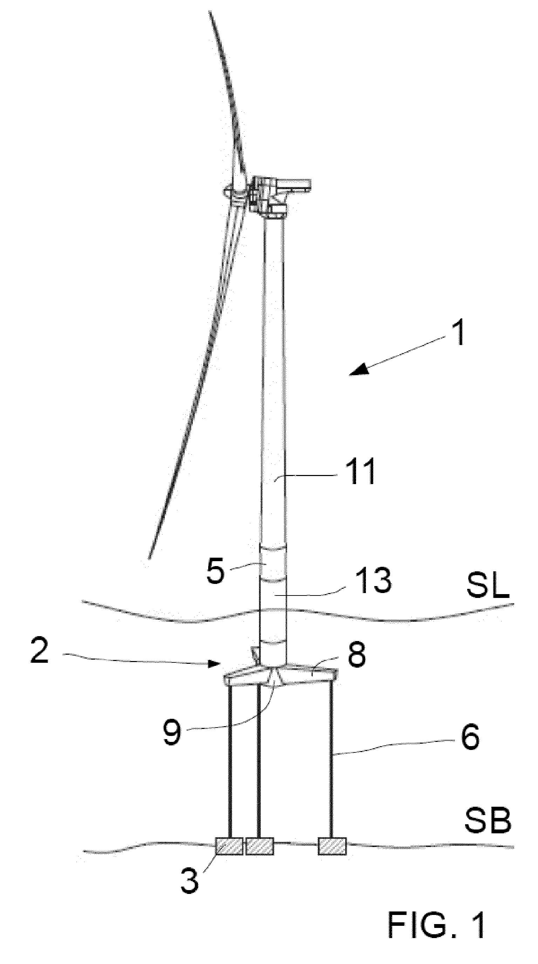

In figure 1, the floating wind turbine 1 may comprise a buoyancy structure 2 that may be designed to remain submerged in a position above the sea bed SB and below the sea level SL to provide an upward thrust for supporting the weight of the wind turbine 1 and other loads such as, for example, impacts, forces exerted by waves, currents and tides, and also aerodynamic forces associated with the wind, rotor rotation, etc.

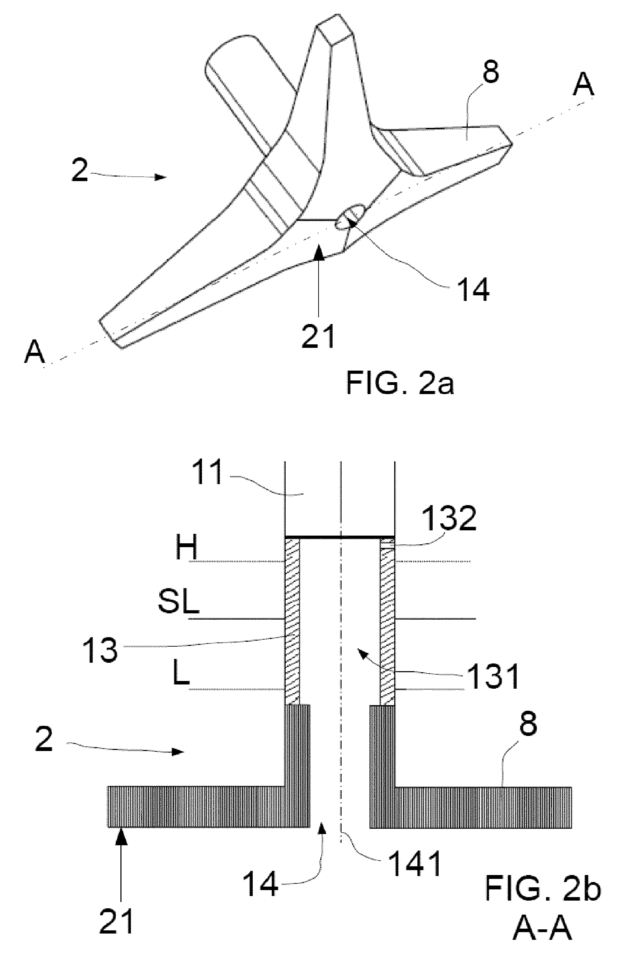

All throughout the present description and claims, the expression "sea level" should be understood to cover all possible heights of the surface of the sea including the highest (H in figure 2b) and lowest (L in figure 2b) tides and including variations due to waves.

Figure 1 shows an example of an offshore wind turbine of the TLP type (Tension Leg Platform) in which the tensioned mooring lines 6 may be substantially vertical and may be connected between gravity anchors 3 on the seabed SB and a bottom portion (see figures 2a and 2b) of the buoyancy structure 2.

All throughout the present description and claims, the expression "mooring lines" should be understood to cover e.g. cables, chains, ropes, wires or similar used for mooring a floating structure.

The buoyancy structure 2 may be in the form of three hollow braces 8 that may extend radially outwards from a hollow central hub 9, at approximately 120° from each other. In this case one mooring line 6 may be attached between each brace 8 and the gravity anchors 3 may be arranged on the seabed SB. The three braces 8 thus contribute to providing excess buoyancy. In alternative examples other number of braces may be foreseen. It is also possible to use more than one mooring line for each brace.

In order to stabilize the floating wind turbine 1 with the buoyancy structure 2, i.e. in order to restrain its six degrees of freedom (surge, sway, heave, pitch, roll and yaw) within acceptable limits, the mooring lines 6 may be put under tension by the excess buoyancy provided by braces 8 and the hollow central hub 9 conforming the buoyancy structure 2. Other configurations are also possible as long as an upward thrust for supporting at least the weight of the wind turbine is provided.

A connecting structure 13 may be provided between the buoyancy structure 2 and a supporting structure 5. The supporting structure 5 may be arranged between the wind turbine tower 11 and the connecting structure 13. In some configurations, such a supporting structure may be known as "transition piece". In some configurations, a "transition piece" may be formed by the combination of connecting structure 13 and supporting structure 5. In yet further configurations, the supporting structure 5 may be omitted and the connecting structure 13 may be directly connected to the tower 11, thus functioning as a transition piece as well.

As shown in figures 2a and 2b, the buoyancy structure 2 may comprise a through channel 14 arranged traversing the buoyancy structure 2 from its bottom portion 21 to an inner portion 131 of the connecting structure 13. Such a through channel 14 may be dimensioned such that sea water can flow into and out of the connecting structure 13. In alternative examples, more through channels may also be provided. In this example, a single through channel 14 that extends substantially along a central longitudinal axis 141 of the buoyancy structure (and pole/tower) is provided.

Considering a wave as a standard substantially sinusoidal wave form, the load variations may be explained by the troughs and crests of the sinusoidal wave form. During crests, the wave may be at a peak, and the offshore structure may be more submerged than the submersion corresponding to mean sea level. During crests, additional excess buoyancy is thus generated, automatically increasing the tension in the mooring lines. During troughs on the other hand, there is less excess buoyancy, automatically decreasing the tension in the mooring lines. A potentially dangerous situation on the stability of the offshore structure may thus arise from wave loads.

The presence of the through channel 14 traversing the buoyancy structure 2 ensures that sea water can flow into the connecting structure 13 during crests and sea water can flow out of the connecting structure 13 during troughs. Buoyancy variations caused by the presence of varying submerged portions of the connecting structure may thus be avoided or at least reduced and since there is substantially no variation in the buoyancy, the tension in the mooring lines could be maintained substantially constant regardless wave loads thus extending their lifetime.

A similar explanation can be given with respect to the influence of tides. Some metres of difference in height of the sea level between low tide ("ebb") and high tide ("flood") may occur. The presence of the through channel traversing the buoyancy structure can ensure that sea water can flow into the connecting structure at high tides and can flow out of the connecting structure at low tides in a similar manner as explained in connection to wave loads. This could avoid or at least reduce buoyancy variations. Therefore, variations in the tension of the mooring lines can also be reduced.

In some examples, one or more breathing orifices 132 may be provided in an upper portion of the connecting structure arranged such that in use it remains above the sea level. In order to design the breathing orifice(s) the air viscosity is considered. Since the viscosity of the air is lower than that of the water, the dimension of this orifice(s) may be relatively small and should generally not represent a significant weakening of the connecting structure. The pole (or tower) may be closed at the bottom so that ingress of corrosive salt particles to the inside of the pole may be avoided. Sensitive (e.g. electric or electronic) components housed within the pole could be protected in this manner.

In alternative examples, one or more breathing orifices may be provided higher up in the tower. In further examples the pole (or tower) could be closed at the bottom and these breathing orifices could be connected through dedicated air channels. Higher up in the tower, the loads are generally lower so that an opening or breathing orifice in an upper region of the tower could be less challenging structurally.

In some examples, the hollow braces 8 as well as the annular hollow central hub portion 9 may all be filled with pressurized gas. This way, hydrostatic pressure on the buoyancy structure's walls may be balanced.

In all examples, the dimensions of the through channel(s) provided in the buoyancy structure may be obtained as a function of the characteristics (maximum height of waves, frequency of waves) of the site in which the offshore floating structure is to be mounted. The frequency and height of waves may depend on the depth of the site.

In order to determine the characteristics of sea water in which a floating offshore structure is to be mounted, it is known to use different models such as Pierson-Moskowitz or JONSWAP (Joint North Sea Wave Project) Spectrums which represent the power spectral density (PSD) curve of sea water. The PSD curve is an empirical relationship between energy distribution (height) of waves and frequency within an ocean or sea.

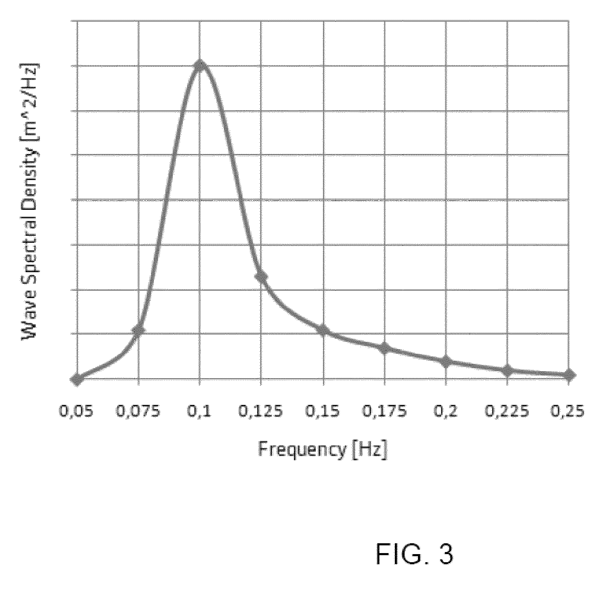

Figure 3 illustrates a power spectral density (PSD) curve of an example of sea water in which a floating offshore structure may be mounted. The curve shows the wave spectral density (energy) as a function of the wave frequency from which the height of the waves at each frequency can be deduced. Since the height of the waves is directly related to the energy provided by such waves (at each frequency) it is thus clear, from this curve, that the waves occurring at a frequency of, for example, 0.1 Hz. have more energy (are higher) than the waves occurring at a frequency of, for example, 0.125 Hz.

Therefore, from the curve of the example shown in figure 3 it can be extracted that the highest waves, in this type of sea water, may occur at a frequency of 0.1 Hz. The highest waves are the ones that would produce the highest buoyancy variations. In order to avoid or at least substantially reduce these buoyancy variations, the dimensions of the through channel(s) provided in the buoyancy structure may be made such that water can flow into and out of the connecting structure at a sufficiently high rate (flow) to at least absorb buoyancy variations that would result from these highest waves occurring at 0.1 Hz.

Furthermore, from the height of the maximum waves and their frequency of occurrence, the speed necessary to fill and empty the internal volume of the connecting structure may be calculated. As the cross-sectional area of the connecting structure is also known, then the volume that needs to flow into/out of it can also be determined. And this data could be used for dimensioning the through channel(s) in order to fill the necessary volume of sea water at the frequency of occurrence of the highest waves.

For example, for a specific site having waves of 7 m high, assuming a substantially sinusoidal wave form, and a frequency of occurrence of 0.1 Hz, the maximum wave height would be reached in 2.5 seconds, i.e. the average speed necessary to fill and empty the connecting structure, in this example, would be 2.8 metres/second. Furthermore, if an offshore wind turbine having a connecting structure with a cross-sectional area of e.g. 20 m² is used, the volume that needs to be filled would be 140m³, thus leading to a required average speed of 56 m³/s. In other words, the through channel(s) need(s) may be dimensioned such that this volume (140m³) can enter the connecting structure in 2.5 seconds.

Examples of the present invention may be applied to any floating offshore structure having a buoyancy structure arranged below the sea level and a pole or tower, the buoyancy structure being connected to the pole by a connecting structure. Even though the example of figure 1 shows an offshore wind turbine of the TLP type (Tension Leg Platform), other floating offshore structures such as floating offshore structures of the TLB type (Taught Leg Buoy) may also be foreseen. In general, all examples may be applied to any floating offshore structure with tensioned mooring lines and excess buoyancy.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A floating offshore structure comprising
a buoyancy structure arranged such that in use it remains below the sea level, and
a pole,
wherein the buoyancy structure is attached to the pole by a substantially tubular connecting structure,
and wherein one or more through channels are provided in the buoyancy structure, the through channels traversing the buoyancy structure and extending from a bottom portion of the buoyancy structure to an inner portion of the connecting structure,
and the through channels being dimensioned such that sea water can flow into and out of the connecting structure with variations of the sea level.

2. A floating offshore structure according to claim 1, wherein the connecting structure or the pole comprises one or more breathing orifices arranged such that in use they remain above the sea level.

3. A floating offshore structure according to any of claims 1-2, wherein the buoyancy structure comprises mooring lines attached to the seabed.

4. A floating offshore structure according to any of claims 1-3, wherein the buoyancy structure comprises a plurality of hollow braces extending radially outwardly from a hollow central hub, the through channels being provided at the central hub and mooring lines being attached to each of the braces.

5. A floating offshore structure according to claim 4, comprising three braces.

6. A floating offshore structure according to any of claims 1-5, comprising one through channel arranged at an axis substantially coincident with a longitudinal axis of symmetry of the connecting structure.

7. A floating offshore structure according to any of claims 1-6, wherein the through channels are dimensioned taking into account statistical information of local waves.

8. A floating offshore structure according to claim 7, wherein the statistical information comprises frequencies and amplitudes of waves.

9. A floating offshore structure according to claim 8, wherein the statistical information comprises the amplitude of the highest wave and the frequency of the highest wave.

10. A floating offshore structure according to any of claims 1-9, wherein the floating offshore structure is a tension leg platform structure.

11. A floating offshore structure according to any of claims 1-9, wherein the floating offshore structure is a taught leg buoy structure.

12. A floating offshore structure according to any of claims 1-11, further comprising a wind turbine and wherein the pole is a wind turbine tower.

13. A method of reducing buoyancy variations in a floating offshore structure comprising a buoyancy structure arranged such that in use it remains below the sea level and a pole, wherein the buoyancy structure is attached to the tower by a substantially tubular connecting structure, and the method comprises providing one or more through channels in the buoyancy structure traversing the buoyancy structure and extending from a bottom portion of the buoyancy structure to an inner portion of the connecting structure such that sea water can flow into and out of the connecting structure depending on the sea level.

14. A method according to claim 13, furthermore including
determining a power spectrum of local waves,
determining a peak in the power spectrum corresponding to the highest waves,
determining an amplitude and a frequency of the highest waves, and
determining one or more dimensions of the through channels based on the amplitude and the frequency of the highest waves.

15. A method according to claim 14, wherein the one or more dimensions of the through channels comprise the total cross-sectional area of the through channels.
